# EUROPEAN PATENT SPECIFICATION

(11) **EP 2 825 082 B1**
(45) Date of publication and mention of the grant of the patent: **11.05.2016**
(21) Application number: 13710535.9
(22) Date of filing: 12.03.2013
(51) Int. Cl.: A47L 5/36, A47L 9/00, A47L 9/24

(54) **CHASSIS FOR A SUCTION CLEANER, AND A SUCTION CLEANER INCLUDING SUCH A CHASSIS**
FAHRGESTELL FÜR EINEN STAUBSAUGER UND STAUBSAUGER MIT SOLCH EINEM FAHRGESTELL
CHÂSSIS POUR ASPIRATEUR, ET ASPIRATEUR COMPRENANT UN TEL CHÂSSIS

(30) Priority: 12.03.2012 GB 201204320
(43) Date of publication of application: 21.01.2015
(73) Proprietor: Techtronic Floor Care Technology Limited, Tortola (VG)
(72) Inventor: IRFAN, Mohammed, Hampton Lovett, Droitwich WR9 0QH (GB)
(74) Representative: Palmer, Nicholas James
(86) International application number: PCT/GB2013/050609
(87) International publication number: WO 2013/136064

(56) References cited:
- EP-A1- 1 917 896
- EP-A1- 2 078 486
- EP-A1- 2 078 487
- EP-A2- 1 632 162
- EP-A2- 1 674 009
- WO-A1-2009/011482
- WO-A1-2012/042234
- WO-A1-2012/140452
- US-A1- 2006 101 610
- US-A1- 2010 242 217

## Description

The invention relates to a chassis for a suction cleaner, and a suction cleaner including such a chassis.

The term "chassis" is used herein to refer to the main framework of a suction cleaner. The chassis carries at least some of the main functional components of the cleaner such as the motor, ducting, wheels, and any decorative panels or casing of the cleaner, and forms the main load-bearing structure of the cleaner.

US 2006/101610 shows a vacuum cleaner that includes a cleaner body; a cyclone body rotatably mounted in the cleaner body; a dust receptacle detachably mounted in the cleaner body and disposed below the cyclone body; and a locking unit locking and releasing the cyclone body and the dust receptacle with respect to each other.

EP 1917896 shows a vacuum cleaner which is capable of separating a dustbin and a main body from each other.

US 2010/242217 shows a cleaning appliance which includes a separating apparatus, and a floor engaging rolling assembly including a device for drawing the fluid flow through the separating apparatus.

In recent years, concerns about material cost, and the environmental impact of consumer products, has led industrial product design towards designs which are more efficient in their material use. However, it is still common among suction cleaners to have a main chassis to carry the required load of the cleaner, and then attach peripheral components to this, such as the ducts which carry the suction airflow of the cleaner. Such components are then commonly covered with decorative panels. As a result, there are often several layers of material within close proximity with one another, all performing separate functions; the chassis is the only component to experience any substantial load in normal use, and the ducts, for example, only act as passageways, and are substantially unloaded. It can therefore be appreciated that there is a duplication of material required to carry the mechanical load within the cleaner, as each of the components serve a single purpose.

According to the first aspect of the invention, we provide a chassis for a vacuum cleaner including a duct portion affording a passage for suction airflow of the cleaner wherein the entire duct portion is formed in the course of a moulding operation which forms the rest of the chassis.

Advantageously, the chassis member is tubular in form, which provides a lightweight, inherently strong member, which affords a passage for airflow. This eliminates the need for a duct to be provided in addition to the chassis, resulting in a reduction in material use, as compared to a conventional suction cleaner. This results in lower material cost for the manufacturer, and a lower total cleaner weight which results in reduced shipping cost, and makes the cleaner easier to use. In addition, there are fewer components to manufacture and assemble, which results in lower manufacturing cost.

The chassis, including such a tubular chassis member (as an integral part), may be formed in a single moulding operation, which reduces the number of manufacturing operations required, and reduces the likelihood of air leakage.

It will be appreciated by those skilled in the art that in order to manufacture a tubular chassis member in the same moulding operation as the chassis, it may be necessary to use tooling parts which co-operate with one another in different directions. For example, it may be necessary to have a top half of a moulding tool moving in an opposing direction relative to a bottom half, and a moulding tool moving in a transverse direction relative to these - for example, in a longitudinal direction relative to the length of the chassis member.

The invention also provides a method of making a chassis for a vacuum cleaner, including performing a moulding operation utilising tooling parts movable relative to one another in a first direction and in a direction transverse thereto.

An embodiment of the invention will now be described, by way of example only, with the aid of the accompanying drawings, of which:
Figure 1 shows a perspective view of an assembled suction cleaner in accordance with the invention;
Figure 2 shows a side view of the suction cleaner, partially-assembled;

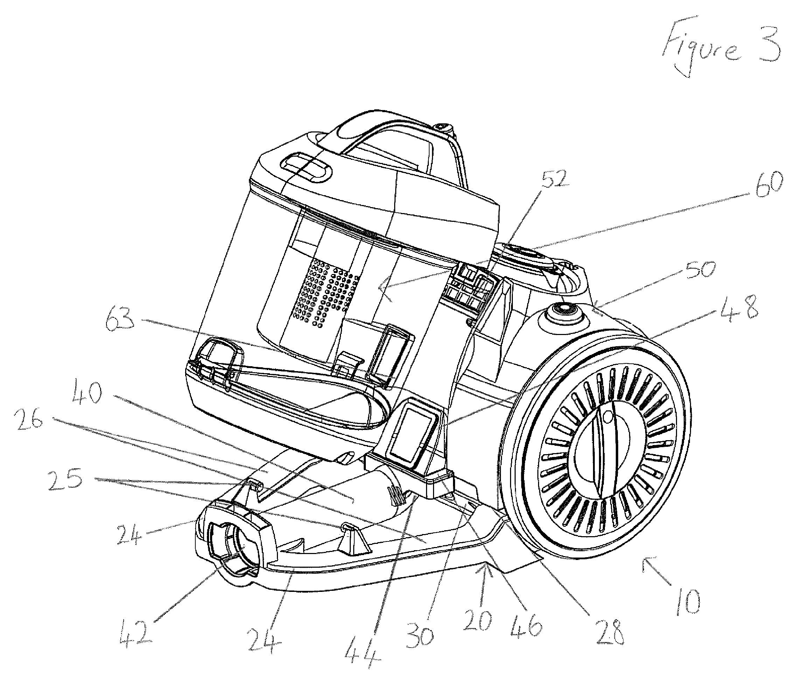

Figure 3 shows a perspective view of the partially assembled suction cleaner, with the bin raised above its operative position;
Figure 4 shows the chassis, alone, of the suction cleaner;

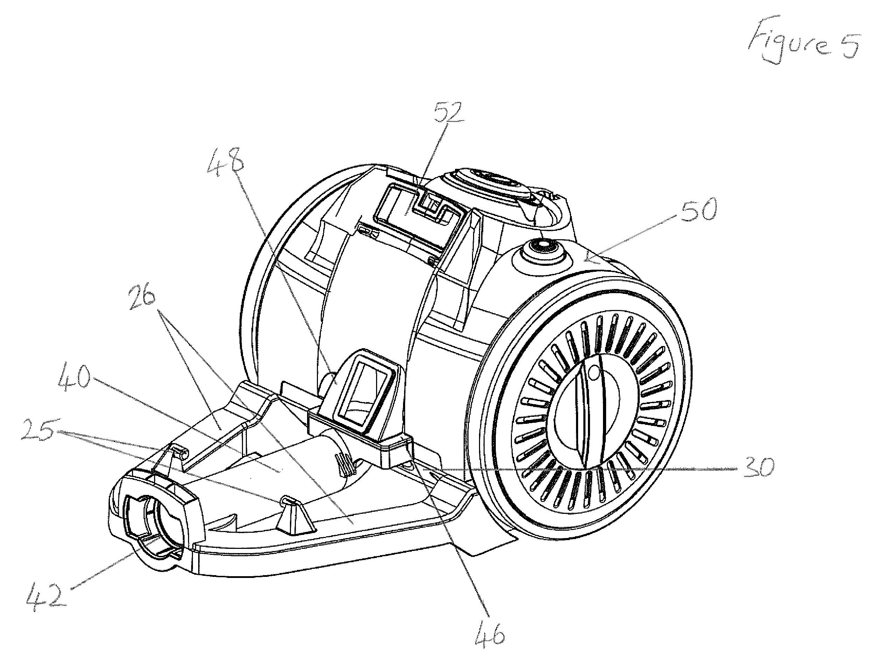

Figure 5 shows a perspective view of the partially assembled suction cleaner, with the bin removed;

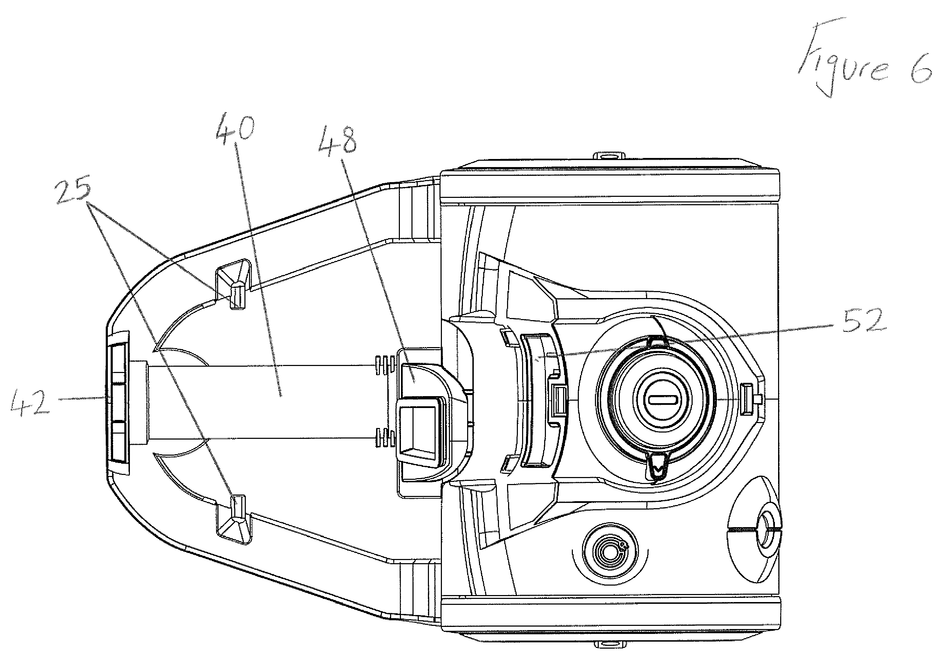

Figure 6 shows a top view of a partially assembled suction cleaner, with the bin removed.

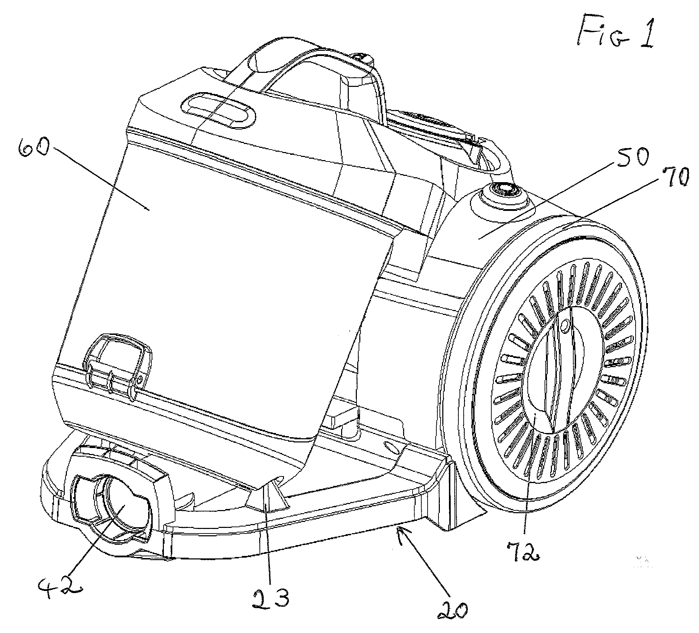

Referring firstly to figure 1, a suction cleaner is shown generally at 10, which includes a chassis 20, the front end of which is visible in the drawing. At the foremost part of the chassis, there is a hose connection portion 42 which permits a suction hose to be releasably connected to the cleaner. There is a generally cylindrical removable separator/collector bin 60, which is operative to remove dirt entrained in the airflow and store it for later disposal, and the bin cooperates with the chassis, in a manner described hereafter, to support the bin on the chassis.

The suction cleaner 10 also has a rear body part or cover 50, which connects to a rear part 30 of the chassis 20 to define an internal volume in which the main operative components of the cleaner are housed, including e.g. an electric motor and a fan for creating suction airflow of the cleaner, a motor housing, an electrical control unit, a power supply cable, a cable reel for storage thereof, and there is also ducting which leads from the airflow exit of the bin 60, to the fan, and thence to at least one exhaust vent opening to the outside. A filter, such as a post-motor filter, may also be provided within the internal volume, and it will be appreciated that other peripheral items such as seals, valves, and fixings for mounting components will also be provided within the internal volume. Wheels (one of which is shown at 70) rotatably support the rear of the cleaner upon the floor surface, and these are mounted on wheel hubs (one of which is shown at 72).

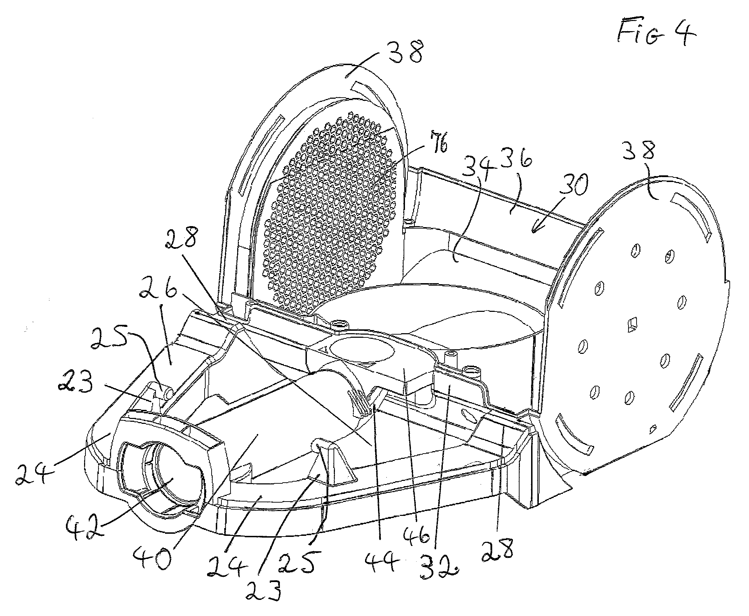

Referring now to figure 4, the chassis of the suction cleaner is shown in isolation, and at the front end thereof, from hose connection portion 42, two limbs 26 comprising respective arcuate portions 24 and then generally linear portions extend rearwardly in a generally horizontal orientation, towards the rear part 30 of the chassis 20. Adjacent the arcuate portions 24 at front end of the limbs 26 of the chassis 20, respective bin-support elements 25 are provided, which are mounted on respective vertical support formations 23 which extend upwardly from the limbs 26, the elements 25 extending horizontally towards each other. The bin-support elements 25 engage in recesses or indentations in a base part of the bin, to support the bin 60 when the suction cleaner 10 is assembled. At their ends most distant from one another, the limbs 26 meet a rear part 30 of the chassis 20 at limb end portions 28.

The chassis further comprises a duct portion 40 which is a hollow cylindrical portion extending rearwardly from hose connection portion 42, in a generally horizontal orientation between the limbs 26 towards the rear part 30 of the chassis 20. Towards its rearmost end, the duct portion 40 turns upwards at elbow portion 44, terminating in a horizontally-disposed flange plate 46. The flange plate 46 is substantially rectangular in shape, and has a generally circular opening to permit airflow through it, and the flange plate is joined to the rear part 30 of the chassis.

The rear part 30 of the chassis 20 supports the main operative components of the suction cleaner 10, as mentioned above, and preferably has a generally flat substantially continuous base 34, to protect the components inside from debris, and also to ensure that electrical components are shielded from the user without the need for an additional panel to be provided on the chassis. Preferably, the rear part of the chassis is moulded to provide appropriate support for all the components which will be mounted thereto, and preferably mounting points for the attachment of fixings are moulded into the chassis.

A front wall 32 of the rear part 30 of the chassis 20 is generally arcuate in side profile, and extends upwardly from base 34. The base 34 extends rearwardly where it meets a rear wall 36 of the cleaner, which is also arcuate in side profile and extends in an upward direction. Two respective side walls 38 extend upwardly from the base of rear part 30 of the chassis 20, between the front and rear walls. They extend higher than the front and rear walls, and they each have an upper portion which is arcuate in side profile.

The side walls 38 have mounting points (such as cut outs or indentations) for the mounting of other parts, such as wheel hubs 72, and also have a lip on their arcuate edge to aid the fitment of the rear cover 50.

Preferably, the entire chassis is moulded as a single piece, from a plastics material, e.g. PP or ABS. Preferably, the moulding is performed in a single operation.

A joining duct 48, which is a somewhat wedge-shaped member, mounts to the top of flange plate 46, and when the suction cleaner is assembled, it faces a bin inlet port 63 of the bin 60. At least one suitable seal will be provided between the face of joining duct 48 and the inlet port 63 of the bin 60 which it abuts when the cleaner is fully assembled, and this seal will substantially prevent communication between the suction airflow travelling through the joining duct 48, and the surrounding air.

At the base of the bin 60, there is a pivoting door 61, which has a latching mechanism to hold it in a closed position when the bin 60 is on the suction cleaner, but also allows it to be opened by the user for the purpose of emptying the contents when the bin 60 is removed from the cleaner. Inside the bin, there is a separator 62, which is illustrated as a cyclonic separator of the "throw-off" type, but it will be appreciated that any suitable design of separator may be used. At the uppermost end of the separator 62, there is a filter housing 64, which contains a filter (not shown). Above this, there is a bin lid 66, which contains a duct which extends radially outwardly towards the edge of the lid. The bin is removably mounted to the rest of the cleaner, for example by way of a spring-loaded latching mechanism, and is arranged so that, in use, the duct in the lid lines up with a corresponding duct on the corresponding face of the rear of the cleaner. The bin lid 66 has a handle 68 on its outer surface, which is equipped with a release button 68a, which releases the latching mechanism, to allow the bin to be removed from the cleaner.

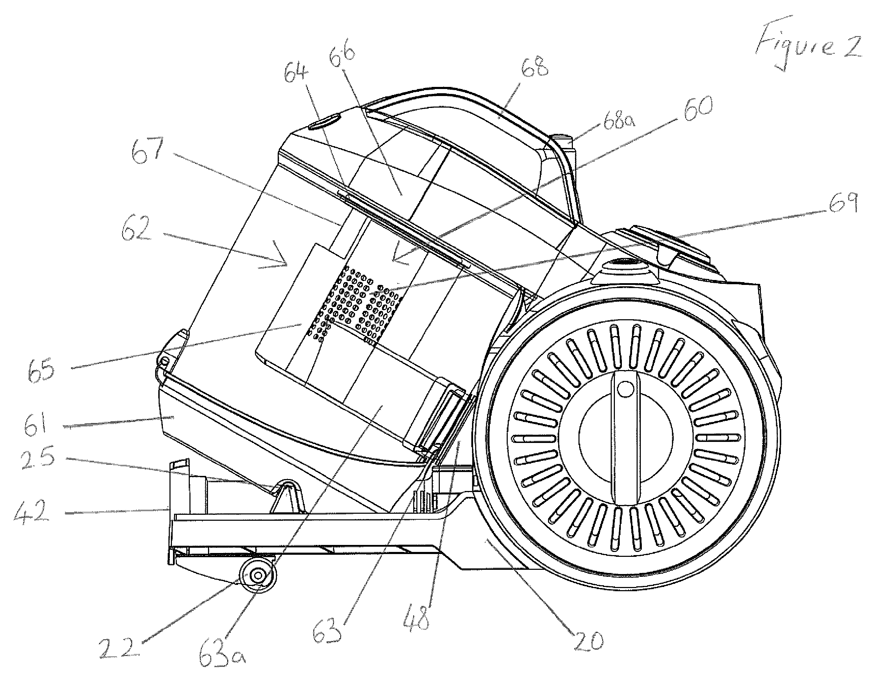

Figure 2 shows the arrangement of separator 62, including an inlet duct 63a extending from inlet port 63 which leads tangentially into a cyclone body 65 of separator 62. In use, the dust-entraining suction airflow would flow through the inlet duct, into the cyclone body, and the dust would be deposited through an aperture 67 into the part of bin 60 outside the separator 62. The suction airflow would then flow through a perforated "shroud" component 69 within the cyclone body through the filter housing 64 (through a filter contained therein), and then through a duct in the bin lid 66 towards the source of suction.

The rear cover 50 may also provide a mounting point for a handle, and also a duct inlet 52 to which bin 60 may be connected, which provides a passage between the two. The rear cover 50 may be moulded to incorporate joining duct 48, or these may be two separate components.

It will be appreciated that the rear cover 50 contributes to the mechanical structure of the cleaner, when it is assembled with the chassis. The rear cover 50 acts as a brace between the side walls 38 of the rear part 30 of the chassis 20, and is mounted so that it can transfer the load from the rear handle, when the cleaner is lifted. The rear cover 50 is preferably moulded as a single piece, with just peripheral items such as the handle and the cover for duct inlet 52 formed as separate components.

Wheels 70 are rotatably mounted on wheel hubs 72, which are themselves mounted directly to the side walls 38 of the rear part 30 of the chassis 20, and support the suction cleaner in rolling contact with the surface on which it is placed. A wheel or wheels 22, preferably able to swivel in the manner of a castor, may be mounted to the front portion of the chassis 20 towards or beneath hose connection portion 42, to support the front of the cleaner in rolling contact with a surface, and allow it to be steered by the user.

In use, a suction hose, which may be connected to a cleaning tool, e.g. a floor tool, is connected to hose connection portion 42, and the user can pull on the hose to move the suction cleaner 10 across a surface. The wheel towards the front of the chassis, allows the user to change the direction of the cleaner by pulling on the suction hose. The dirt-laden airflow from the floor tool is directed through the suction hose, and enters the cleaner through hose connection portion 42, flowing along the passage afforded by duct portion 40, before flowing through elbow portion 44 and joining duct 48 into bin inlet 63. The air flows through separator 62, and the dirt is thrown off into bin 60, before the air passes up through filter housing 64 and into a duct in the bin lid 65.

The clean air then flows through duct inlet 52, into the ducts inside rear case 50, which lead to the motor, and the air is then directed through a post-motor filter, out of exhaust vents 76 to the outside.

When the bin 60 becomes full, it can be detached from the cleaner 10 by pressing the release button 68a to release the latching mechanism, and pulling the bin 60 away from the cleaner using handle 68, and can then be emptied by opening the pivoting door 61. The pivoting door can then be closed, and the dirt bin 60 returned to the cleaner 10. As the cleaner is placed into its normal assembled position, the spring loaded latching mechanism acts to retain it in that position.

When used in this specification and claims, the terms "comprises" and "comprising" and variations thereof mean that the specified features, steps or integers are included. The terms are not to be interpreted to exclude the presence of other features, steps or components.

## Claims

1. A chassis (20) for a vacuum cleaner (10) including a duct portion (40) affording a passage for suction airflow of the cleaner (10) **characterized in that** the entire
duct portion (40) is formed in the course of a moulding operation which forms the rest of the chassis (20).

2. A chassis (20) according to claim 1 wherein the duct portion (40) extends rearwardly from a front portion of the chassis (20).

3. A chassis (20) according to claim 1 or claim 2 wherein the duct portion (40) extends from a hose connection formation (42).

4. A chassis (20) according to any of the preceding claims wherein the duct (40) extends to a generally mid region of the cleaner

5. A chassis (20) according to any of the preceding claims wherein the duct portion (40) ends at a second duct portion (44) affording a passage extending at an inclination to the passage of the said duct portion.

6. A chassis (20) according to any of the preceding claims wherein the duct portion (40) is for transmission of dirt-laden suction airflow.

7. A chassis (20) according to any of the preceding claims wherein the duct portion (40) is substantially cylindrical in form.

8. A chassis (20) according to any of the preceding claims wherein the duct portion (40) forms part of the load-bearing structure of the chassis (20).

9. A chassis (20) according to claim 2 or any one of claims 3 to 8 where dependent on claim 2, comprising at least one further chassis member (26) extending rearwardly from the front portion of the chassis (20) or comprising two further chassis members (26) extending rearwardly from the front portion of the chassis (20).

10. A chassis (20) according to claim 9 wherein the chassis members (26) diverge from the front portion of the chassis (20) to a generally mid region of the chassis (20).

11. A chassis (20) according to claim 9 or claim 10 wherein the chassis members (26) comprise formations (23, 25) for supporting a separator (60) of the vacuum cleaner (10).

12. A vacuum cleaner (10) including a chassis (20) according to any of the preceding claims.

13. A vacuum cleaner (10) according to claim 12 comprising a cover portion (50) which forms a part of the load bearing structure of the cleaner (10) or comprising a cover portion (50) which forms part of the load bearing structure of the cleaner (10) and the cover portion (50) is moulded as a single piece.

14. A vacuum cleaner according to claim 13 wherein the cover portion (50) is connected directly to the chassis (20).

15. A method of making a chassis (20) for a vacuum cleaner (10) according to any one of claims 1 to 11, including conducting a moulding operation utilising tooling parts moveable relative to one another in a first direction, and a part or parts moveable in a second direction transverse thereto.

## Patentansprüche

1. Fahrgestell (20) für einen Staubsauger (10) einschließlich eines Kanalabschnitts (40), der einen Durchgang für Saugluftstrom des Staubsaugers (10) ermöglicht, **dadurch gekennzeichnet, dass** der gesamte Kanalabschnitt (40) im Verlauf eines Formvorgangs, der den Rest des Fahrgestells (20) bildet, entsteht.

2. Fahrgestell (20) nach Anspruch 1, worin der Kanalabschnitt (40) von einem Frontabschnitt des Fahrgestells (20) nach hinten verläuft.

3. Fahrgestell (20) nach Anspruch 1 oder Anspruch 2, worin der Kanalabschnitt (40) von einem Schlauchverbindungsteil (42) verläuft.

4. Fahrgestell (20) nach irgendeinem vorhergehenden Anspruch, worin der Kanal (40) zu einem generell mittleren Bereich des Staubsaugers verläuft.

5. Fahrgestell (20) nach irgendeinem vorhergehenden Anspruch, worin der Kanalabschnitt (40) an einem zweiten Kanalabschnitt (44) endet und einen Durchgang ermöglicht, der an einer Neigung zum Durchgang des besagten Kanalabschnitts verläuft.

6. Fahrgestell (20) nach irgendeinem vorhergehenden Anspruch, worin der Kanalabschnitt (40) zur Übertragung von schmutzhaltigem Saugluftstrom dient.

7. Fahrgestell (20) nach irgendeinem vorhergehenden Anspruch, worin der Kanalabschnitt (40) im Wesentlichen eine zylindrische Form aufweist.

8. Fahrgestell (20) nach irgendeinem vorhergehenden Anspruch, worin der Kanalabschnitt (40) Teil der lasttragenden Struktur des Fahrgestells (20) ist.

9. Fahrgestell (20) nach Anspruch 2 oder irgendeinem Anspruch 3 bis 8, umfassend, abhängig von Anspruch 2, mindestens ein weiteres Fahrgestellelement (26), das vom Frontabschnitt des Fahrgestells (20) nach hinten verläuft, oder zwei weitere Fahrgestellelemente (26), die vom Frontabschnitt des Fahrgestells (20) nach hinten verlaufen.

10. Fahrgestell (20) nach Anspruch 9, worin die Fahrgestellelemente (26) vom Frontabschnitt des Fahrgestells (20) zu einem generell mittleren Bereich des Fahrgestells (20) divergieren.

11. Fahrgestell (20) nach Anspruch 9 oder Anspruch 10, worin die Fahrgestellelemente (26) Teile (23, 25) zum Abstützen eines Abscheiders (60) des Staubsaugers (10) umfassen.

12. Staubsauger (10) einschließlich eines Fahrgestells (20) nach irgendeinem vorhergehenden Anspruch.

13. Staubsauger (10) nach Anspruch 12, umfassend einen Abdeckabschnitt (50), der Teil der lasttragenden Struktur des Staubsaugers (10) ist, oder umfassend einen Abdeckabschnitt (50), der Teil der lasttragenden Struktur des Staubsaugers (10) ist und worin der Abdeckabschnitt (50) als Einzelstück geformt ist.

14. Staubsauger nach Anspruch 13, worin der Abdeckabschnitt (50) direkt mit dem Fahrgestell (20) verbunden ist.

15. Verfahren zum Herstellen eines Fahrgestells (20) für einen Staubsauger (10) nach irgendeinem Anspruch 1 bis 11, einschließlich Durchführung eines Formvorgangs unter Verwendung von Werkzeugteilen, die in Bezug zueinander in einer ersten Richtung beweglich sind, und eines Teils oder von Teilen, die in einer zweiten Richtung quer dazu beweglich sind.

## Revendications

1. Châssis (20) pour aspirateur (10) comprenant une partie conduit (40) fournissant un passage pour le courant d'air d'aspiration de l'aspirateur (10), **caractérisé en ce que** la partie conduit (40) est entièrement formée au cours d'une opération de moulage qui forme le reste du châssis (20).

2. Châssis (20) selon la revendication 1, dans lequel la partie conduit (40) s'étend vers l'arrière à partir d'une partie avant du châssis (20).

3. Châssis (20) selon la revendication 1 ou 2, dans lequel la partie conduit (40) s'étend à partir d'une formation de raccordement de tuyau (42).

4. Châssis (20) selon l'une quelconque des revendications précédentes, dans lequel le conduit (40) s'étend vers une région généralement médiane de l'aspirateur.

5. Châssis (20) selon l'une quelconque des revendications précédentes, dans lequel le conduit (40) se termine au niveau d'une seconde partie conduit (44) fournissant un passage s'étendant avec une certaine inclinaison vers le passage de ladite partie conduit.

6. Châssis (20) selon l'une quelconque des revendications précédentes, dans lequel la partie conduit (40) permet la transmission dudit courant d'air d'aspiration sale.

7. Châssis (20) selon l'une quelconque des revendications précédentes, dans lequel la partie conduit (40) est pratiquement de forme cylindrique.

8. Châssis (20) selon l'une quelconque des revendications précédentes, dans lequel la partie conduit (40) fait partie de la structure porteuse du châssis (20).

9. Châssis (20) selon la revendication 2 ou l'une quelconque des revendications 3 à 8 dépendant de la revendication 2, comprenant au moins un autre élément de châssis (26) s'étendant vers l'arrière à partir de la partie avant du châssis (20) ou comprenant deux autres éléments de châssis (26) s'étendant vers l'arrière à partir de la partie avant du châssis (20).

10. Châssis (20) selon la revendication 9, dans lequel les éléments de châssis (26) divergent de la partie avant du châssis (20) vers une région généralement médiane du châssis (20).

11. Châssis (20) selon la revendication 9 ou 10, dans lequel les éléments de châssis (26) comprennent des formations (23, 25) permettant de supporter un séparateur (60) de l'aspirateur (10).

12. Aspirateur (10) comprenant un châssis (20) selon l'une quelconque des revendications précédentes.

13. Aspirateur (10) selon la revendication 12, comprenant une partie capot (50) qui forme une partie de la structure porteuse de l'aspirateur (10), ou comprenant une partie capot (50) qui fait partie de la structure porteuse de l'aspirateur (10), ladite partie capot (50) étant moulée en un seul bloc.

14. Aspirateur selon la revendication 13, dans lequel la partie capot (50) est reliée directement au châssis (20).

15. Procédé de fabrication d'un châssis (20) pour un aspirateur (10) selon l'une quelconque des revendications 1 à 11, consistant à réaliser une opération de moulage au moyen de pièces d'outillage mobiles les unes par rapport aux autres dans une première direction, et une ou plusieurs pièces mobiles dans une seconde direction transversale à la première.
